# EUROPEAN PATENT APPLICATION

(11) **EP 2 717 148 A2**
(43) Date of publication of application: **09.04.2014**
(21) Application number: 13176983.8
(22) Date of filing: 18.07.2013
(51) Int. Cl.: G06F 3/0488, G06F 3/0482, G06F 3/0481

(54) **Mobile terminal and control method for the mobile terminal**

(30) Priority: 02.10.2012 KR 20120109742
(71) Applicant: LG Electronics, Inc., Seoul, 150-721 (KR)
(72) Inventor: Lee, Donghoon, Seoul (KR); Kim, Taeyeon, Seoul (KR)
(74) Representative: Urner, Peter

(57) **Abstract**

A mobile terminal (100) including a wireless communication unit (110) configured to wirelessly communicate with at least one other terminal; a display unit (151) configured to display first screen information corresponding to a first function executed on the mobile terminal (100); and a controller (180) configured to display a function icon for entering a second function associated with the displayed first screen information, said second function being predetermined and different than the first function, receive a first selection signal indicating a selection of at least a portion of the displayed first screen information, receive a second selection signal indicating a selection of the function icon, execute the second function using the selected portion of the displayed first screen information, and display second screen information corresponding to the second function on the display unit (151).

## Description

### BACKGROUND OF THE INVENTION

Field of the Invention

The present invention relates to a mobile terminal and method of controlling the mobile terminal.

**Description of the Related Art**

Terminals can be classified into a mobile terminal and a stationary terminal. The mobile terminal can be further classified into a handheld terminal and a vehicle mount terminal. The terminal can also be used to capture still images or moving images, play music or video files, play games, receive broadcast and the like, and thus functions as an integrated multimedia player. However, operating the multiple functions is inconvenient especially when performing multiple applications.

### SUMMARY OF THE INVENTION

Accordingly, one object of the present invention is to address the above-noted and other problems of the related art.

Another object of the present invention is to provide a mobile terminal and a control method for intuitively and conveniently using a function of an application that is different from an application currently being used.

To achieve these and other advantages and in accordance with the purpose of the present invention, as embodied and broadly described herein, the present invention provides in one aspect a mobile terminal according to an embodiment of the present invention may include a display unit configured to display screen information and a controller configured to display a function icon for immediately entering a function associated with the screen information, wherein the controller controls the display unit to display a function icon corresponding to functions associated with the screen information, respectively, in a state that the screen information is displayed, and executes a function corresponding to the function icon based on a user's selection.

According to an embodiment, the controller may select at least part of the screen information based on a touch input onto the display unit, and when the at least part of the screen information is selected and then any one of the function icons is selected, the controller may process a function corresponding to the selected function icon in association with the at least part of the screen information.

According to an embodiment, the controller may select the at least part of the screen information based on a drag touch input onto the display unit.

According to an embodiment, the selection of the function icon may be selected based on a touch input which follows a drag touch input for selecting the at least part of the screen information, or selected based on any one of the function icons being dragged to the selected at least part of the screen information.

According to an embodiment, the controller may process the at least part of the screen information in a highlighted manner to inform the user that the at least part of the screen information has been selected or output an image object displayed with the at least part of the screen information.

According to an embodiment, the function icon may be displayed in at least one edge region of the display unit, and the controller may reduce the screen information such that the screen information is not overlapped with the one edge region displayed with the function icon when the function icon is displayed on the display unit.

According to an embodiment, the controller may adjust a ratio of the one edge region displayed with the function icon to maintain a screen ratio prior to reducing a display ratio of the screen information even though the screen information is reduced.

According to an embodiment, the location of the one edge region displayed with the function icon may correspond to the direction to which the user applies a touch input onto the display unit.

According to an embodiment, an execution screen corresponding to the function icon may be displayed on the display unit as executing a function corresponding to the function icon.

According to an embodiment, the controller may switch the screen information to the execution screen, or divide the display unit into a plurality of display regions to display the screen information and the execution screen at the same time, or output a popup window overlapped with at least part of the screen information to display the execution screen on the display unit.

According to an embodiment, the controller may output a return icon on the display unit to provide a screen prior to displaying the execution screen for the user, and terminate the output of the execution screen in response to the return icon being selected by the user, and return the screen of the display unit to the screen prior to displaying the execution screen.

According to an embodiment, a function icon displayed on the display unit may vary according to the kind of the screen information displayed on the display unit.

According to an embodiment, the function icon displayed according to the kind of screen information may be determined based on matching information stored in the memory.

According to an embodiment, when there is a request for displaying a function icon for immediately entering the function associated with the screen information, the controller may analyze an application associated with the screen information, and retrieve at least one another application matched to the application from the memory, and then display a function icon corresponding to the retrieved application on the display unit.

According to an embodiment, when an application associated with the screen information corresponds to an explorer function, one of function icons displayed on the display unit may correspond to a dictionary function application.

According to an embodiment, a function icon corresponding to a function previously specified by the user may be displayed along with a function icon determined based on the matching information on the display unit.

According to an embodiment, a control command for displaying the function icon may be generated based on a touch input onto the display unit, or generated based on an external physical force to a bezel region surrounding the display unit.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a block diagram illustrating a mobile terminal according to an embodiment of the present invention;

FIGS. 2A and 2B are front perspective views illustrating an example of a mobile terminal according to an embodiment of the present invention;

FIG. 3 is a flow chart illustrating a method of controlling a mobile terminal according to an embodiment of the present invention;

FIGS. 4A and 4B are conceptual views illustrating a control method illustrated in FIG. 3;

FIGS. 5A, 5B and 5C are conceptual views illustrating a method of implementing a function associated with screen information in a mobile terminal according to an embodiment of the present invention;

FIGS. 6A, 6B, 6C and 6D are conceptual views illustrating a method of configuring a screen in a mobile terminal according to an embodiment of the present invention;

FIGS. 7A, 7B and 7C are conceptual views illustrating a method of displaying function icons in a mobile terminal according to an embodiment of the present invention; and

FIGS. 8A, 8B and 8C are conceptual views illustrating the configuration of a function icon displayed on the display unit in a mobile terminal according to an embodiment of the present invention.

### DETAILED DESCRIPTION OF THE INVENTION

Hereinafter, the embodiments disclosed herein will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. Also, the accompanying drawings are merely illustrated to easily explain the spirit of the invention, and therefore, they should not be construed to limit the technological spirit disclosed herein by the accompanying drawings.

A mobile terminal disclosed herein may include a portable phone, a smart phone, a laptop computer, a digital broadcast terminal, a personal digital assistant (PDA), a portable multimedia player (PMP), a navigation, a slate PC, a tablet PC, an ultra book and the like. However, the configuration according to the following description may be applicable to a stationary terminal such as a digital TV, a desktop computer, and the like, excluding constituent elements particularly configured for mobile purposes.

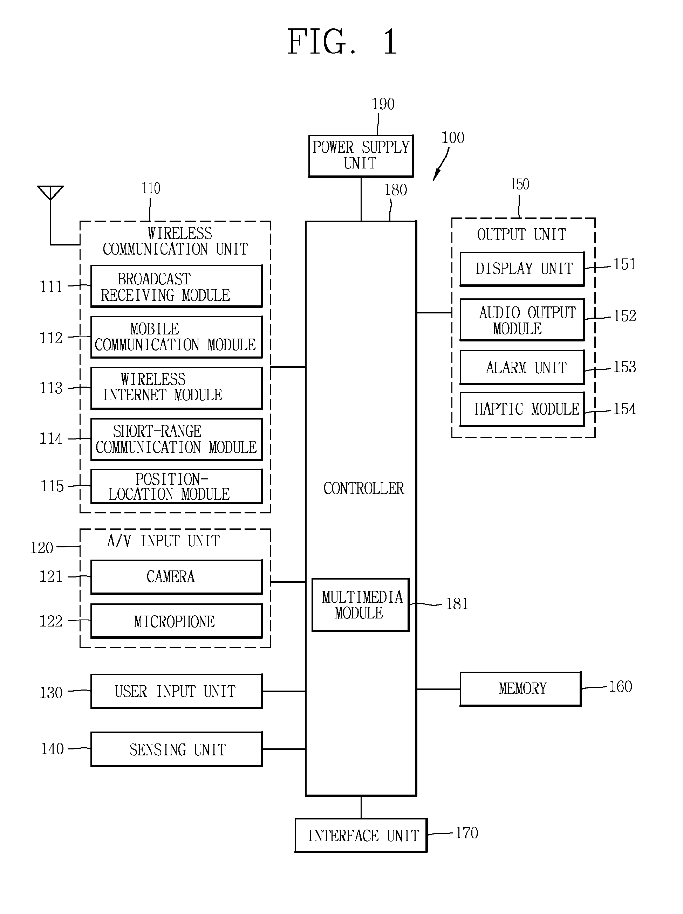

FIG. 1 is a block diagram illustrating a mobile terminal according to an embodiment disclosed herein. As shown, the mobile terminal 100 includes a wireless communication unit 110, an audio/video (A/V) input unit 120, a user input unit 130, a sensing unit 140, an output unit 150, a memory 160, an interface unit 170, a controller 180, a power supply unit 190, and the like. However, the mobile terminal may be implemented with greater or less number of elements than those illustrated elements.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like.

The broadcast receiving module 111 is, of course, configured to be suitable for every broadcast system that provides a broadcast signal as well as the above-mentioned digital broadcast systems. The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The mobile communication module 112 may be configured to implement an video communication mode and a voice communication mode. The video communication mode refers to a configuration in which communication is made while viewing an image of the counterpart, and the voice communication mode refers to a configuration in which communication is made without viewing an image of the counterpart. The mobile communication module 112 may be configured to transmit or receive at least one of voice or image data to implement the video communication mode and voice communication mode.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes an image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and output into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone. Furthermore, the sensing unit 140 takes charge of a sensing function associated with whether or not power is supplied from the power supply unit 190, or whether or not an external device is coupled to the interface unit 170.

The output unit 150 is configured to provide an output for audio signal, video signal, or alarm signal, and the output unit 150 may include the display unit 151, an audio output module 152, an alarm unit 153, a haptic module 154, and the like.

The display unit 151 can display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

When the display unit 151 and a touch sensitive sensor (hereinafter, referred to as a "touch sensor") have an interlayer structure (hereinafter, referred to as a "touch screen"), the display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 180. Accordingly, the controller 180 can sense which region of the display unit 151 has been touched.

A proximity sensor may also be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The examples of the proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this instance, the touch screen (touch sensor) may be categorized into a proximity sensor.

Hereinafter, for the sake of convenience of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects through a user's direct contact, or a user's muscular sense using a finger or a hand. The haptic module 154 may be implemented in two or more in number according to the configuration of the mobile terminal 100.

The memory 160 may store a program for processing and controlling the controller 180. Alternatively, the memory 160 may temporarily store input/output data (e.g., phonebook data, messages, audios, still images, videos, and the like). Also, the memory 160 may store data related to various patterns of vibrations and sounds output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals input from the cradle by a user to the mobile terminal 100. Such various command signals or power input from the cradle may operate as signals for recognizing that the mobile terminal has accurately been mounted to the cradle.

The controller 180 typically controls the overall operations of the mobile terminal 100. For example, the controller 180 performs the control and processing associated with telephony calls, data communications, video calls, and the like. The controller 180 can include a multimedia module 181 for reproducing multimedia data. The multimedia module 181 may be implemented in an integrated manner within the controller 180 or may be implemented in a separate manner from the controller 180.

Furthermore, the controller 180 can perform a pattern recognition processing so as to recognize writing or drawing input on the touch screen as text or image. The controller 180 can also implement a lock state for limiting the user's control command input to applications when the state of the mobile terminal satisfies the prescribed condition. In addition, the controller 180 can control a lock screen displayed in the lock state based on a touch input sensed over the display unit 151 (hereinafter, referred to as a "touch screen") in the lock state.

The power supply unit 190 receives external power and internal power under the control of the controller 180 to provide power required by various components.

Various embodiments described herein may be implemented in a medium that can be read by a computer or similar device using software, hardware, or any combination thereof. For a hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units designed to perform the functions described herein. In some cases, such embodiments may be implemented in the controller 180 itself.

For a software implementation, the embodiments such as procedures or functions may be implemented together with separate software modules. The software modules may perform at least one function or operation described herein. Software codes can be implemented by a software application written in any suitable programming language. The software codes may be stored in the memory 160 and executed by the controller 180.

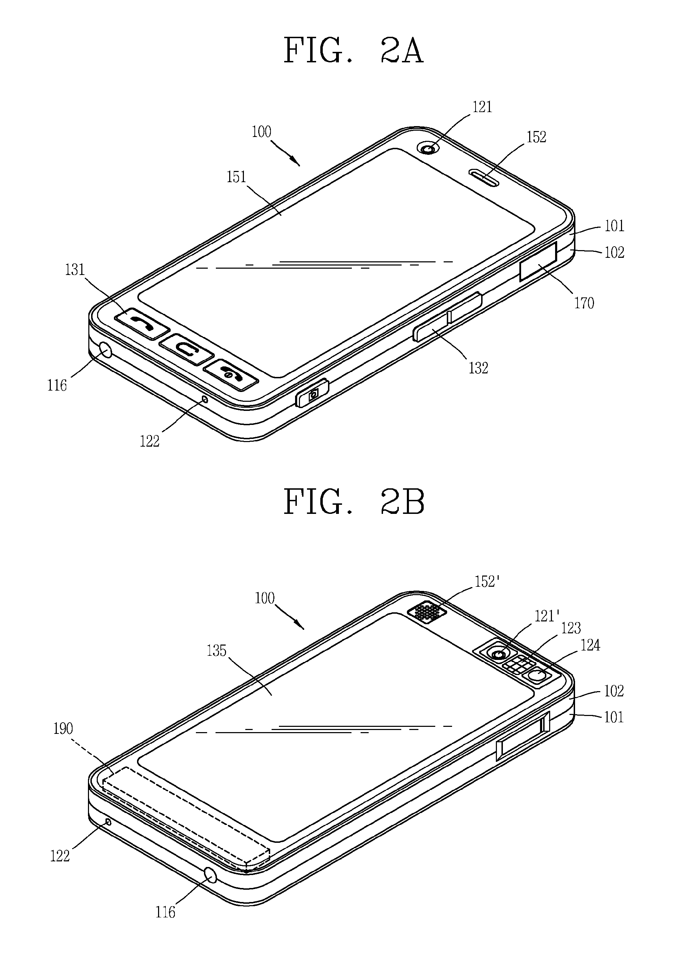

FIG. 2A is a front perspective view illustrating an example of the mobile terminal 100 according to an embodiment of the present invention or an example of a mobile terminal, and FIG. 2B is a rear perspective view illustrating the mobile terminal 100 in FIG. 2A.

The mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

According to the drawing, the terminal body 100 (hereinafter, referred to as a "body") includes a front surface, a lateral surface, and a rear surface. Furthermore, the body may include both ends thereof formed along the length direction.

The body 100 includes a case (casing, housing, cover, etc.) forming an appearance of the terminal. In this embodiment, the case may be divided into a front surface (hereinafter, referred to as a "front case") 101 and a rear surface (hereinafter, referred to as a "rear case") 102. Various electronic components may be incorporated into a space formed between the front case 101 and rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (130/131, 132), a microphone 122, an interface 170, and the like may be arranged on the terminal body 100, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102. On the contrary, the microphone 122 may be disposed at the other end of the body 100.

The user input unit 130 is manipulated to receive a command for controlling the operation of the portable terminal 100, and may include a plurality of manipulation units 131, 132. The manipulation units 131, 132 may be commonly designated as a manipulating portion, and any method may be employed if it is a tactile manner allowing the user to perform manipulation with a tactile feeling.

The content input by the manipulation units 131, 132 may be set in various ways. For example, the first manipulation unit 131 may receive a command, such as start, end, scroll, or the like, and the second manipulation unit 132 may receive a command, such as controlling a volume level being output from the audio output unit 152, or switching it into a touch recognition mode of the display unit 151.

Referring to FIG. 2B, an audio output unit 152' may be additionally disposed on a rear surface, namely, a rear case 102, of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the mobile terminal 100 may be mounted on a rear surface of the terminal body. The power supply unit 190 may be configured so as to be incorporated in the terminal body, or directly detachable from the outside of the terminal body.

In addition, a touch pad 135 for detecting a touch may be additionally mounted on the rear case 102. The touch pad 135 may be configured in an optical transmission type similarly to the display unit 151. In this case, if the display unit 151 is configured to output visual information from both sides of the display unit 151, then the visual information may be also recognized through the touch pad 135. The information being output from the both sides thereof may be controlled by the touch pad 135. In addition, a display may be additionally mounted on the touch pad 135, and a touch screen may be also disposed on the rear case 102.

Furthermore, a camera 121' may be additionally mounted on the rear case 102 of the terminal body. The camera 121' has an image capturing direction, which is substantially opposite to the direction of the camera 121 (refer to FIG. 2A), and may have different pixels from those of the first video input unit 121.

For example, that the camera 121 may preferably have a relatively small number of pixels enough not to cause a difficulty when the user captures his or her own face and sends it to the other party during a video call or the like, and the camera 121' has a relatively large number of pixels since the user often captures a general object that is not sent immediately. The cameras 121' may be provided in the terminal body 100 in a rotatable and pop-up ready manner.

Further, a flash 123 and a mirror 124 may be additionally disposed adjacent to the camera 121'. The flash 123 illuminates light toward an object when capturing the object with the camera 121'. The mirror allows the user to look at his or her own face, or the like, in a reflected way when capturing himself or herself (in a self-portrait mode) by using the camera 121'.

In addition, an audio output unit 152' may be additionally disposed on a rear surface of the terminal body. The audio output unit 152' together with the audio output unit 152 (refer to FIG. 2A) can implement a stereo function, and it may be also used to implement a speaker phone mode during a phone call.

Furthermore, a power supply unit 190 for supplying power to the portable terminal 100 may be mounted on a rear surface of the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be configured in an optical transmission type similarly to the display unit 151. In this instance, if the display unit 151 is configured to output visual information from both sides of the display unit 151, then the visual information may be also recognized through the touch pad 135. The information being output from the both sides thereof may be controlled by the touch pad 135. In addition, a display may be additionally mounted on the touch pad 135, and a touch screen may be also disposed on the rear case 102.

The touch pad 135 operates in a reciprocal relation to the display unit 151 of the front case 101. The touch pad 135 may be disposed in parallel on a rear side of the display unit 151. The touch pad 135 may have the same or a smaller size as or than that of the display unit 151. A retractable broadcast antenna 116 may also be provided.

Thus, in the mobile terminal according to an embodiment of the present invention, it is possible to intuitively and conveniently use the function of an application which is different from an application currently being used. In other words, when there is a request for implementing an application, which is different from an application corresponding to screen information currently being displayed on the display unit, from the user, it is possible to display the function icons of the different application corresponding to a function associated with the application corresponding to the screen information.

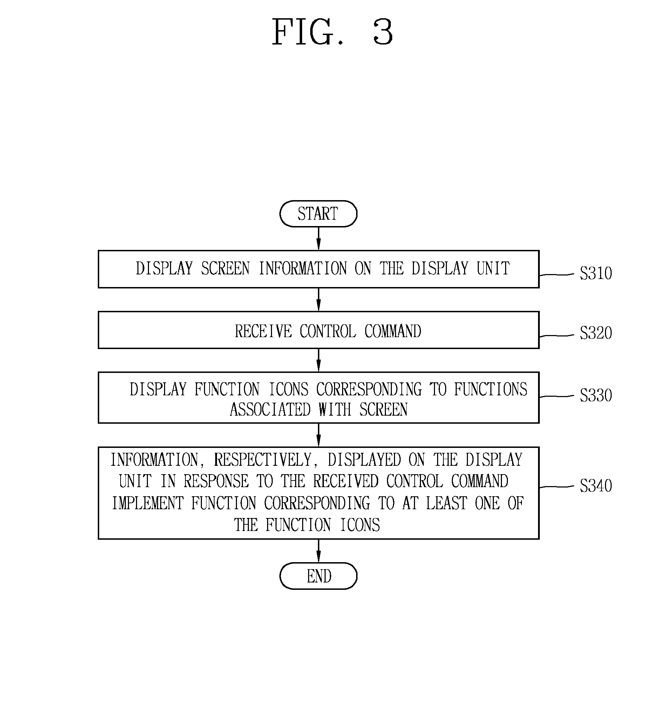

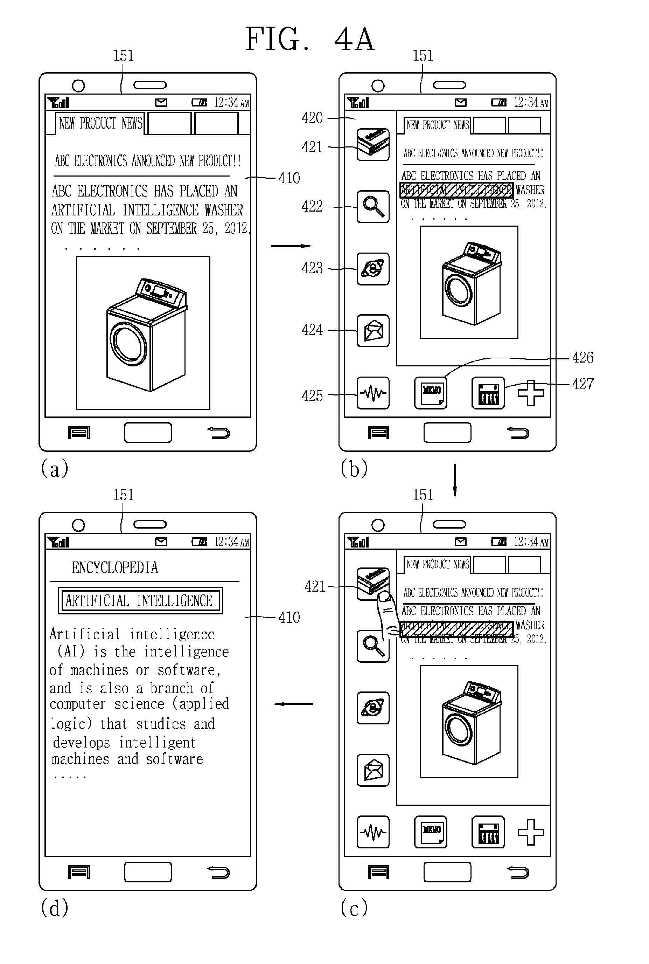

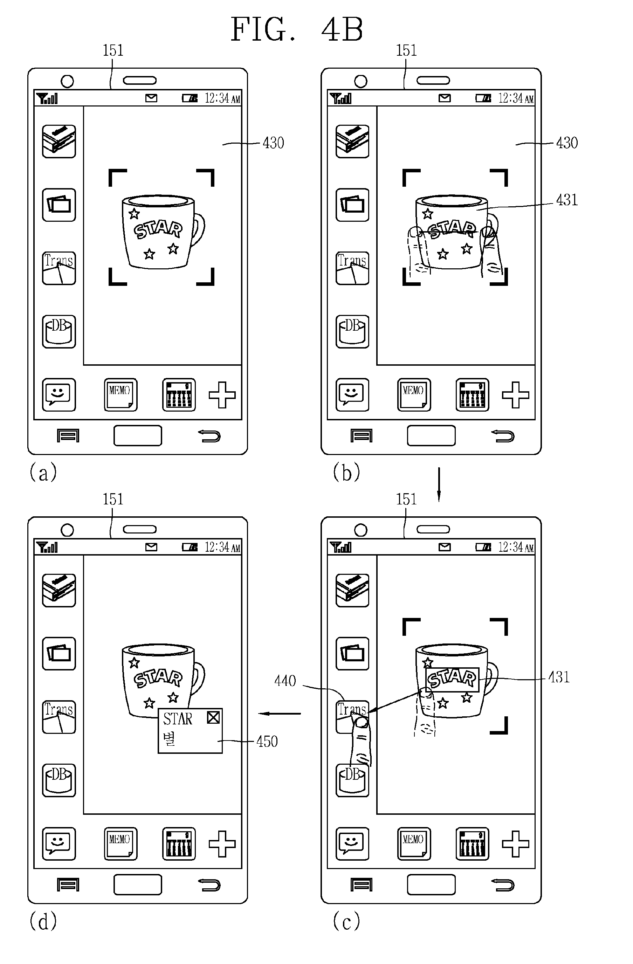

Accordingly, the user can reduce time and avoid inconvenience for retrieving a function icon from the home screen page or menu page or the like to implement another application. Hereinafter, a control method for providing a function associated with screen information displayed on the display unit will be described with reference to FIGS. 3, 4A and 4B. In particular, FIG. 3 is a flow chart illustrating a method of controlling a mobile terminal according to an embodiment of the present invention, and FIGS. 4A and 4B are conceptual views illustrating a control method illustrated in FIG. 3.

First, screen information is displayed on the display unit 151 in the mobile terminal 100 (S310). Here, the screen information may be various types of information that can be displayed on the display unit 151. As an example, the screen information may be an execution screen home screen page, or menu screen of the application. The type of the screen information may be determined according to the user's selection. For example, as illustrated in FIG. 4A(a), the screen information 410 is an execution screen of an application associated with a function of accessing a web page.

While displaying the screen information, the controller 180 receives a control command for displaying a function icon corresponding to a function associated with the screen information currently being displayed (S320). The method of receiving the control command may be configured in various ways. For an example, the control command may be received when a touch input with a preset method (for example, a long touch input for more than a preset period of time) is applied to the display unit 151. In another example, the control command may be received when a pressure more than a predetermined level to a pressure sensor provided in a bezel region of the mobile terminal body 100 is sensed. In still another example, an image object (or icon) for receiving the control command may be displayed on the display unit 151, and the control command may be received when a touch input is applied to the image object.

As described above, when implementing a function different from a function corresponding to the screen information currently being displayed on the display unit 151, the user can allow the control command to be received at the mobile terminal.

Accordingly, when the control command is received as described above, the controller 180 outputs function icons corresponding to functions associated with the screen information displayed on the display unit 151 in response to the received control command (S330).

For example, when a control command is received when the screen information 410 is displayed as illustrated in FIG. 4A(a), the controller 180 displays at least one function icon 421 to 427 in a preset region 420 on the display unit 151 as illustrated in FIG. 4A(b). When web page screen information including a news item is displayed, the function associated with the news item may be a dictionary, a search, an internet explorer execution, a message, a memo, or a schedule function.

The function icons 421 to 427 may be displayed in the preset region 420 of the display unit 151, and the preset region 420 may be always assigned to the display unit 151 upon receiving the control command regardless of the number of function icons. Accordingly, the preset region 420 may be displayed to be distinguished from the screen information 410 and thus is identified by the user.

In addition, a function corresponding to the function icon displayed on the display unit 151 is a function associated with the function corresponding to the screen information 410. The information related to the associated function may be stored in advance in the memory 160, and the controller 180 can output a function icon corresponding to the associated function with reference to the information (or matching information) stored in the memory 160.

In other words, when there is a request for displaying a function icon for immediately entering the function associated with the screen information, the controller 180 analyzes an application associated with the screen information, and retrieves at least one other application matched to the application from the memory 160, and then displays a function icon corresponding to the retrieved application on the display unit.

The examples of a function associated with the function corresponding to currently displayed screen information are described below along with Table 1.

**(Table 1)**

| Group 1 | Group 2 | Group 3 | Group 4 | Group 5 |
|---|---|---|---|---|
| Web/SNS | Music/video | Game | SMS, email | Capture video/photo |
| Search | Search based on meta information | Recommend similar games | Dictionary | SNS shared |
| Dictionary | Recommend to acquaintances | Recommend other contents enjoyable with games | Search | Other services shared |
| Map | Transmitted through SMS function | | Link transmission | Search |
| Link transmission | Data transmitted through near field communication | | Transmitted to TV | Dictionary |
| Transmitted to TV | | | Listen by TTS-conversion | Data transmitted through near field communication |
| Listen by TTS-converting web page content | | | | Edit |

As illustrated in the above Table, functions included in each group may be classified into mutually associated functions. However, the mutually associated functions are not limited to the above Table 1, and may be changed in various ways.

Moreover, a function corresponding to the function icon displayed on the display unit 151 may be a function previously set by the user. In this instance, the preset function may be displayed on the display unit 151 in response to the control command being received regardless of a function associated with the screen information. Furthermore, a function corresponding to the function icon displayed on the display unit 151 may be a function frequently performed by the mobile terminal.

When at least one of function icons is selected by the users subsequent to displaying function icons corresponding to the associated functions, the controller 180 implements a function corresponding to the selected function icon (S340). As an example, the controller 180 can display the execution screen of a function corresponding to the selected function icon on the display unit instead of the function icon 410. In this manner, the controller 180 can quickly switch the screen information 410 displayed on the display unit 151 to other screen information through a function icon.

In another example, the controller 180 can process at least part of the screen information displayed on the display unit 151 in association with a function corresponding to the function icon selected by the user as well as displaying another function icon as described above.

For example, when at least part of the screen information (e.g., text "artificial intelligence") is selected by a touch input as illustrated in FIG. 4A(b), and then a function icon 421 corresponding to the "dictionary" function as illustrated in FIG. 4A(c) is selected, the controller 180 can use the text "artificial intelligence" as a search word when the dictionary function is performed as illustrated in FIG. 4A(d). Accordingly, as illustrated in FIG. 4A(d), the user can obtain a search result for his or her desired search word without entering a search word desired to be retrieved through the dictionary function.

In another example, FIG. 4B(a) illustrates a preview image 430 being displayed. Referring to FIGS. 4B(b) and 4B(c), when one region 431 is selected on the preview image 430 while performing a photo capture function, the controller 180 can recognize text contained in the one region 431 through an optical character reader (OCR) function. Then, when a translation function icon 440 is selected, a translation result 450 for the recognized text is displayed on the display unit 151 as illustrated in FIG. 4B(d). That is, the word "star" is translated into another language (e.g., Korean in this example).

In addition, when there is a request for displaying a function icon while performing a phone call function, the controller 180 can perform sound-to-text conversion on the content of the conversation to perform a function associated with at least one of the output function icons. For example, when schedule information is STT-converted and a schedule related function icon is selected, the converted text may be added to the schedule. Also, when a voice related function is selected from the function icons when an e-book function is performed, an e-book may be output as voice sounds.

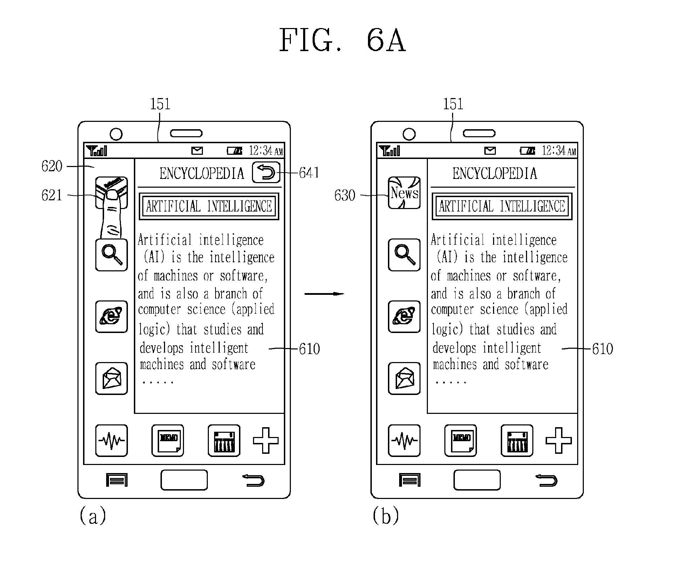

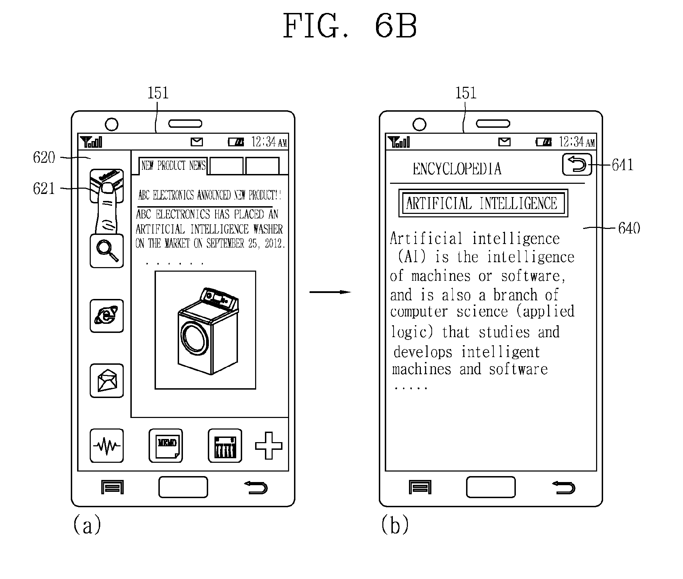

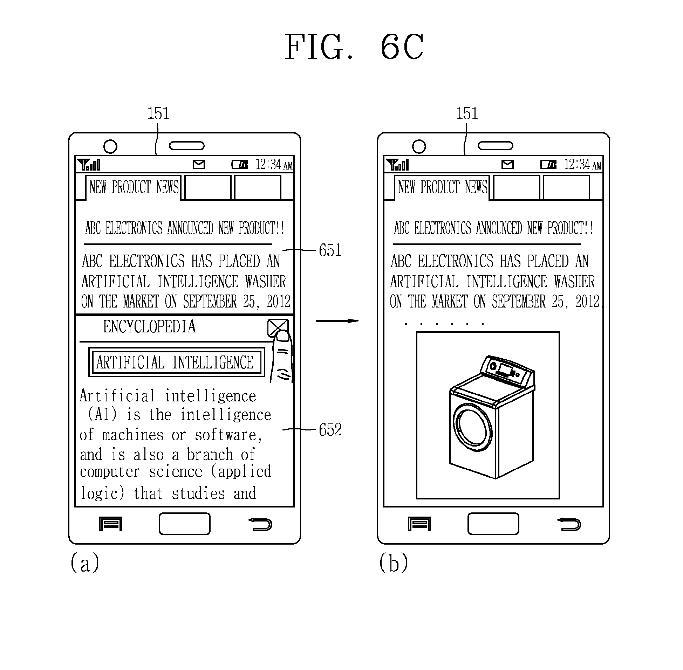

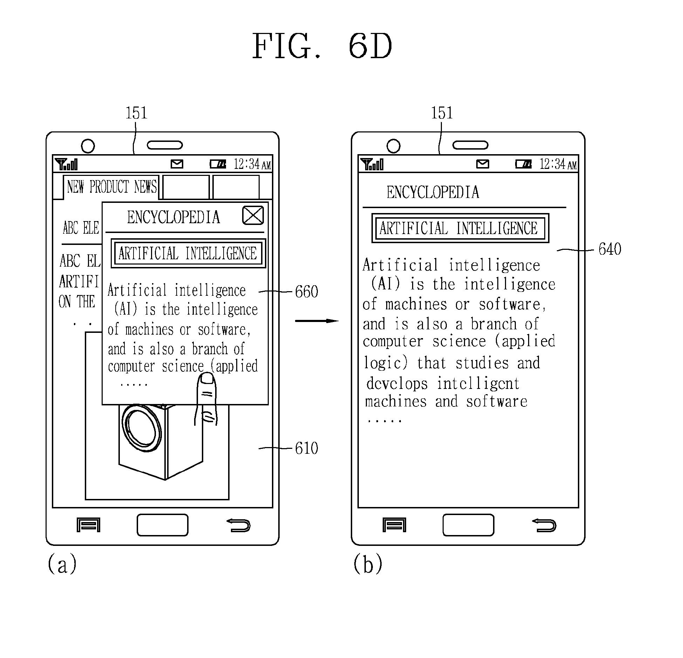

A method of displaying a function screen (or other screen information) being output in correspondence to a function icon being selected will be described later with reference to FIGS. 6A, 6B, 6C and 6D.

As described above, a mobile terminal according to an embodiment of the present invention can output information related to a function associated with screen information displayed on the display unit along with the screen information. Accordingly, it is possible to reduce complexity in which the user has to terminate the display of screen information currently being displayed to perform a function associated with screen information displayed on the display unit and output the home screen page or menu screen and then retrieve his or her desired function to perform another function.

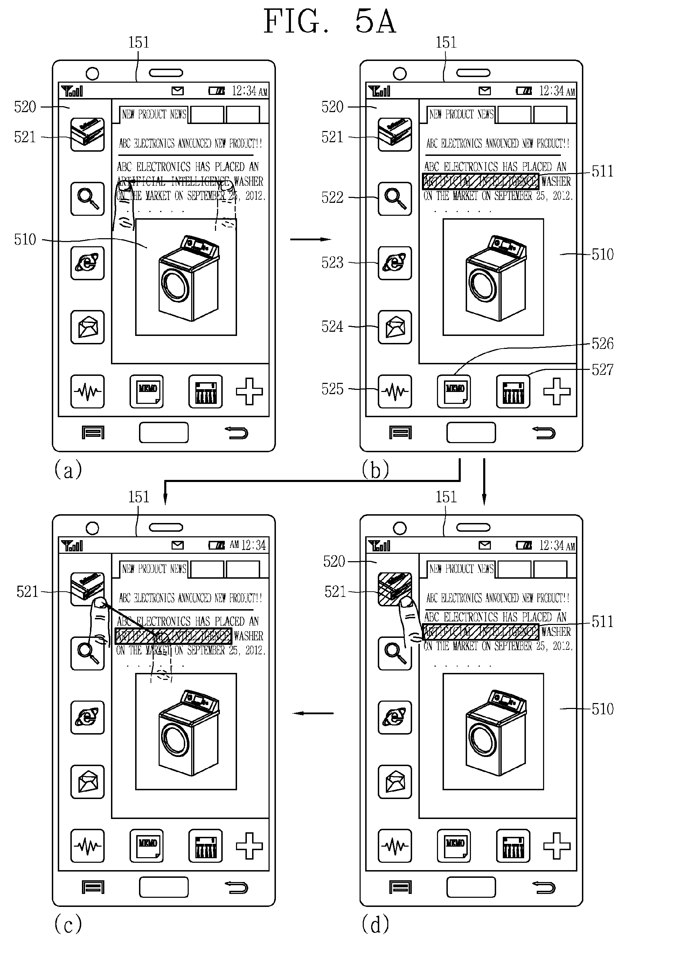

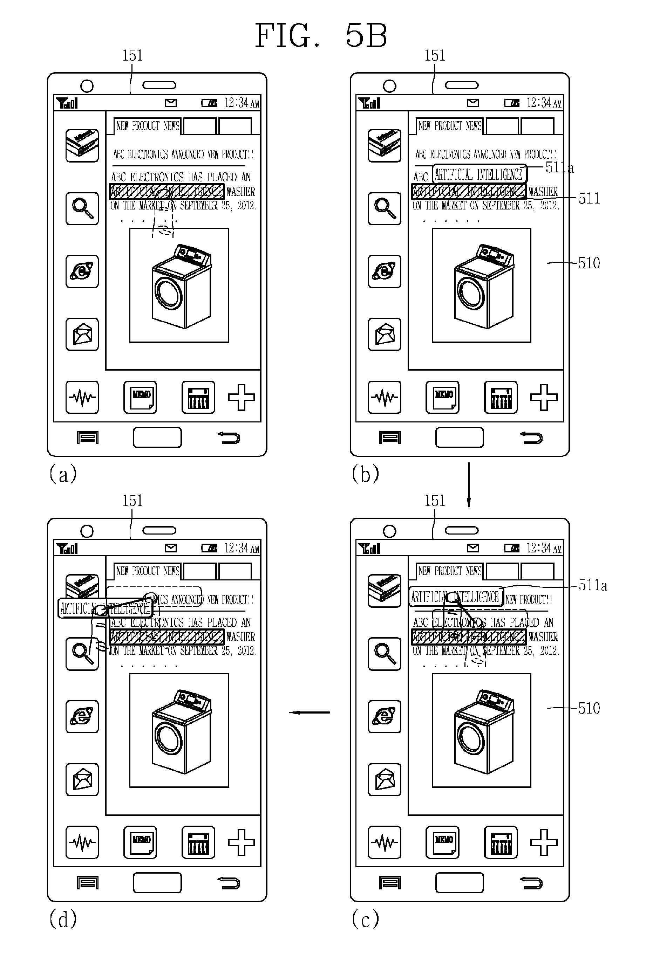

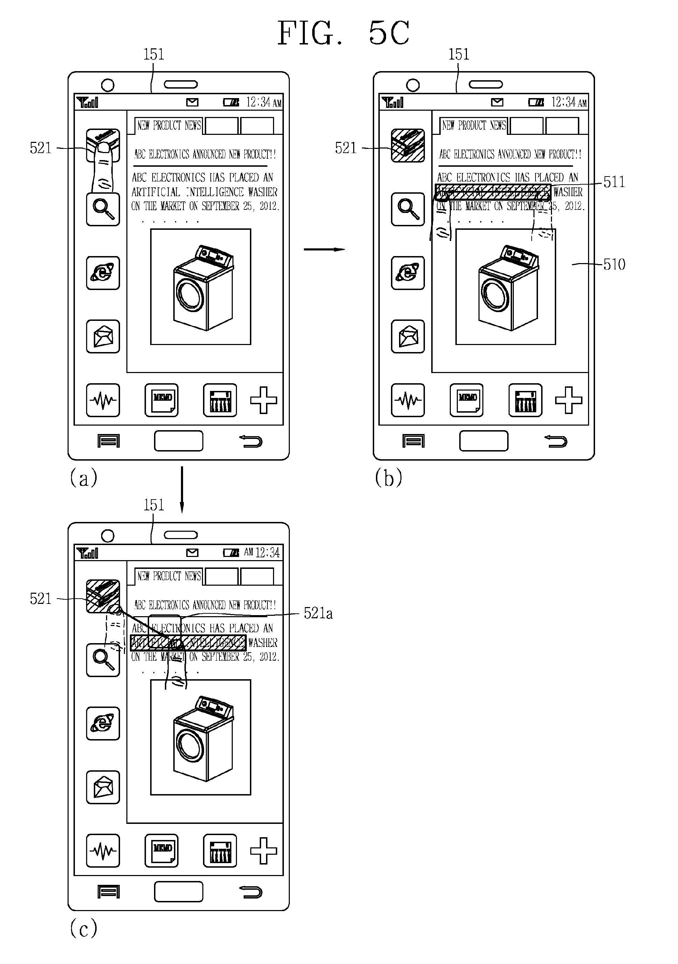

Hereinafter, a method of processing at least part of the screen information in association with a function corresponding to the function icon will be described in more detail with reference to the accompanying drawings. In particular, FIGS. 5A, 5B and 5C are conceptual views illustrating a method of implementing a function associated with screen information in a mobile terminal according to an embodiment of the present invention.

As illustrated in FIG. 5A, after displaying function icons 521 to 527 on one region 520, the controller 180 can process at least part of the screen information displayed on the display unit 151 selected by the user in association with a function corresponding to the function icon selected by the user among the function icons 521 to 527.

In more detail, as illustrated in FIG. 5A(a), the selection of at least part of the screen information 510 can be performed by a touch input onto the display unit 151 in a preset manner. The touch input in a preset manner may be a drag touch input or a long touch input for more than a preset period of time. When a long touch input is applied, the controller 180 can select information within a predetermined range in association with information displayed at a position to which the long touch input is applied.

As illustrated in FIG. 5A(a), when a drag input is applied to the text "artificial intelligence," which is at least part of the screen information displayed on the display unit 151, the controller 180 can process a region corresponding to the text "artificial intelligence" in a highlighted manner as illustrated in FIG. 5A(b) to inform the user that the text "artificial intelligence" has been selected.

Further, after selecting the text "artificial intelligence," the controller 180 can select a function processed using the selected text through various ways. As an example, as illustrated in FIG. 5A(c), the controller 180 can select any one function icon based on a touch input being applied to any one of the function icons 521 to 527, which follows a drag touch input (or long touch input) for selecting the text "artificial intelligence".

In another example, as illustrated in FIG. 5A(d), the controller 180 can select any one function icon based on a touch input which does not follow a touch input for selecting the text "artificial intelligence", namely, a separate touch input subsequent to selecting the text "artificial intelligence." Thus, when at least part of the screen information is selected and then the function icon is selected, the controller 180 can process a function corresponding to the function icon in association with the selected at least part of the screen information.

In addition, in FIG. 5A, when at least part of the screen information is selected, a method of processing the selected at least part of the screen information in a highlighted manner has been described. In addition to the method of processing the selected at least part of the screen information 511 in a highlighted manner, the controller 180 can display information corresponding to the selected at least part of the screen information 511 using a separate image object 511a as illustrated in FIGS. 5B(a) and 5B(b).

Accordingly, the user can check whether or not the screen information is correctly selected through the image object 511a. Then, the controller 180 can select any one function icon (for example, dictionary function icon 521) based on the image object 511a being moved to the a function icon as illustrated in FIGS. 5B(c) and 5B(d). As illustrated in the drawing, the controller 180 can change the display location of the image object 511a according to a touch trace of the touch input to visually provide information on the image object 511a being moved based on the user's touch input.

In another example, even when at least one of the function icons is selected and then at least part of the screen information is selected, the controller 180 can process the selected at least part of the screen information in association with a function corresponding to the selected function icon as illustrated in FIGS. 5C(a), 5C(b) and 5C(c).

For example, as illustrated in FIG. 5C(b), subsequent to selecting the function icon 521, the controller 180 can implement a dictionary function corresponding to the function icon 521 based on the text "artificial intelligence" being selected by a touch input which does not follow a touch input for selecting the function icon 521. In this instance, the controller 180 can process the dictionary function icon 521 in a highlighted manner to inform the user that the function icon 521 has been selected.

Furthermore, as illustrated in FIG. 5C(c), when the text "artificial intelligence" is selected by a touch input which follows a touch input for selecting the function icon 521, the controller 180 can implement a dictionary function corresponding to the function icon 521. In this instance, the controller 180 can display an image 521a corresponding to the function icon 521 along a touch trace of the touch input which follows a touch input to the dictionary function icon 521 to inform the user that the function icon 521 has been selected. In addition, the selection of at least part of the screen information in a mobile terminal can be performed even prior to displaying the function icon on the display unit 151.

As described above, when at least part of the screen information is selected to be processed in association with a function corresponding to the function icon in a mobile terminal according to the present invention, the at least part of the screen information can be suitably used for a function corresponding to the selected function icon.

Hereinafter, when a function icon is selected, a method of outputting a function screen corresponding to the function icon will be described in more detail with reference to FIGS. 6A, 6B, 6C and 6D, which are conceptual views illustrating a method of configuring a screen in a mobile terminal according to an embodiment of the present invention.

As illustrated in FIGS. 4A, 4B, 5A, 5B and 5C, when a function icon is selected, the controller 180 displays screen information corresponding to a function of the selected function icon on the display unit 151. For example, when a dictionary function icon is selected, the controller 180 displays screen information on a dictionary function on the display unit 151. In this manner, when screen information corresponding to a function icon is displayed, the controller 180 can control the screen of the display unit 151 in various ways to effectively provide screen information that has been displayed on the display unit 151 prior to displaying screen information corresponding to the function icon.

As an example, referring to FIG. 6A, when a dictionary function icon 621 is selected in FIG. 4A and screen information 610 corresponding to the dictionary function is displayed on the display unit 151, the controller 180 can output a "return icon" 641 providing a function for returning to screen information that has been displayed on the display unit 151 prior to displaying the screen information 610 corresponding to the dictionary function as illustrated in FIG. 6A(a). Furthermore, when the return icon 641 is selected by the user, the controller 180 displays screen information that has been displayed on the display unit 151 prior to displaying the screen information 610 corresponding to the dictionary function on the display unit 151.

In another example, referring to FIG. 6A(b), when screen information 610 corresponding to the dictionary function is displayed on the display unit, the controller 180 can dispose a function icon of the function corresponding to the screen information that has been displayed on the display unit 151 prior to displaying the screen information 610 corresponding to the dictionary function at a location in which the dictionary function icon has been displayed. Accordingly, when the function icon 630 is selected, screen information that has been displayed on the display unit 151 prior to displaying the screen information 610 corresponding to the dictionary function is displayed.

In still another example, even though a dictionary function icon is selected and the screen information 610 corresponding to the dictionary function is displayed on the display unit 151 as previously illustrated in FIG. 4A, the controller 180 can continuously display function icons in one region 620 of the display unit 151. Also, when a function icon 621 is selected in the one region 620 as illustrated in FIGS. 6B(a) and 6B(b), the controller 180 can display screen information 640 of a function corresponding to the selected function icon 621 without displaying function icons displayed in the one region 620. Furthermore, in this instance, the controller 180 can display a "return icon" 641 providing a function for returning to screen information that has been displayed on the display unit 151 prior to displaying the screen image 640 corresponding to the function icon.

In still another example, when a dictionary function icon is selected as previously illustrated in FIG. 4A, the controller 180 can divide the display unit 151 into a plurality of regions, and display screen information 651 that has been initially displayed on the display unit 151 in one region and display screen information 652 corresponding to the dictionary function in another region, thereby allowing the user to use a plurality of screen information at the same time as illustrated in FIG. 6C(a). Then, the divided screen may be restored to an initial state as illustrated in FIG. 6C(b) based on the user's selection.

In still another example, when a dictionary function icon is selected as previously illustrated in FIG. 4A, the controller 180 can display screen information corresponding to the dictionary function using a popup window 660 as illustrated in FIG. 6D(a). Then, the controller 180 can display screen information 640 corresponding to the selected function icon as a whole on the display unit 151 as illustrated in FIG. 6D(b).

In addition, when a function icon is selected and the screen information corresponds to the selected function icon, the controller 180 can determine whether or not to display other function icons that have been displayed on the display unit 151 in various ways based on the user's selection or basic setting information.

As described above, the mobile terminal according to an embodiment of the present invention can divide a display region into a plurality of regions or display a popup window, thereby effectively providing screen information corresponding to a function selected by the user and screen information that has been initially displayed on the display unit.

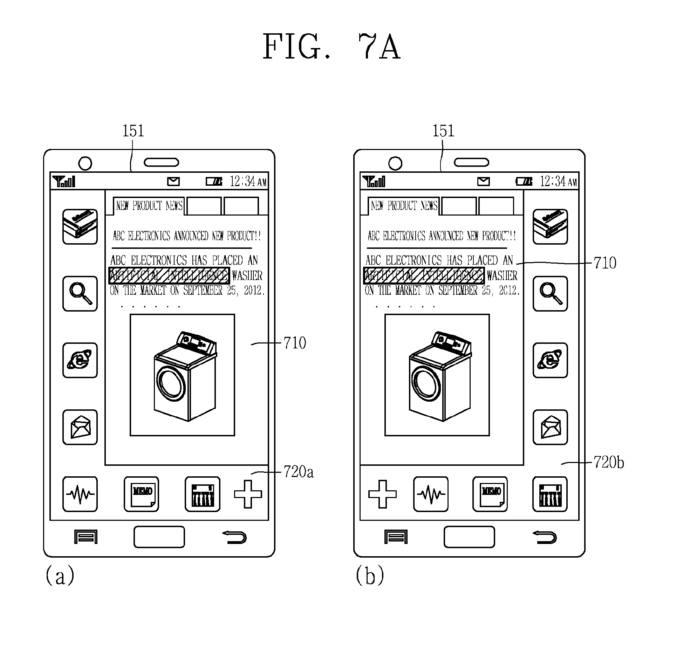

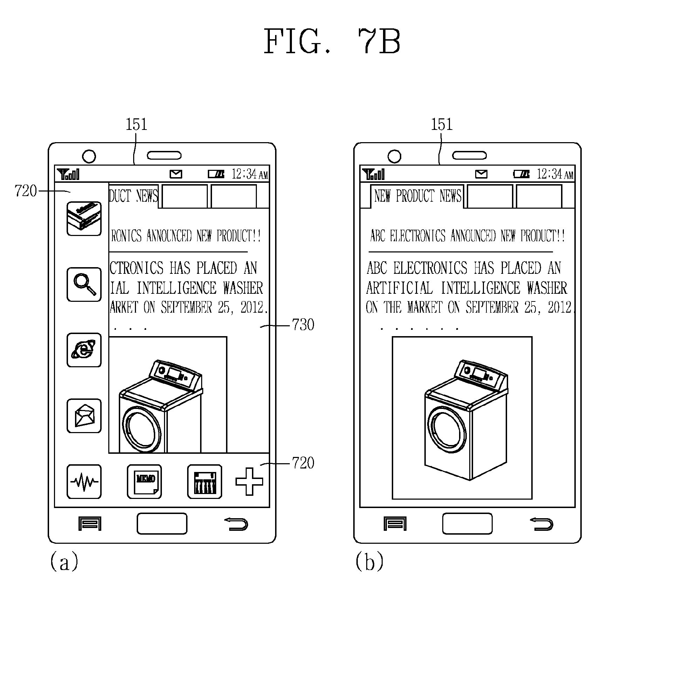

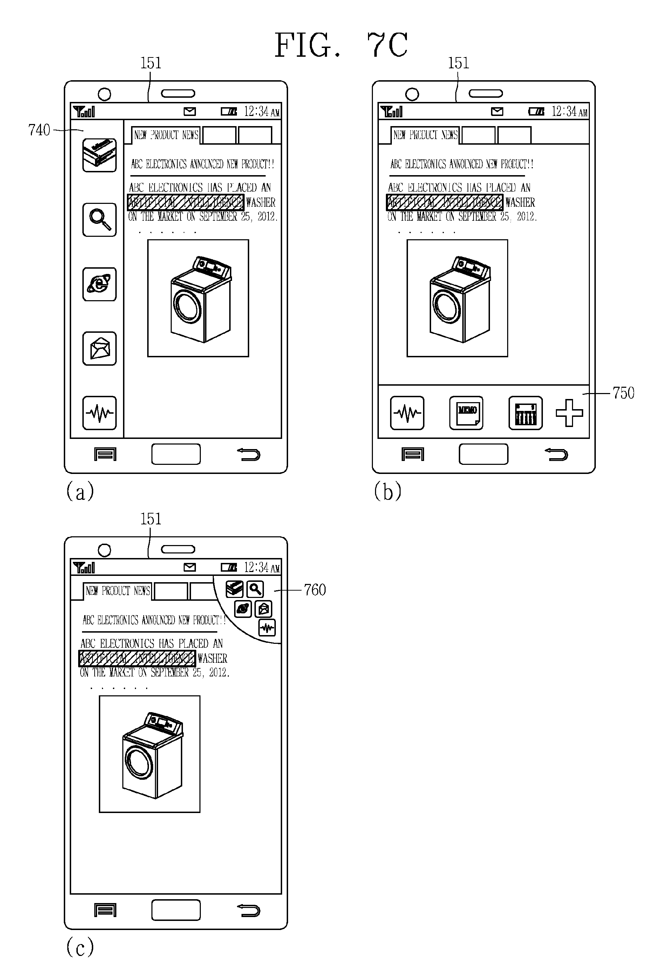

Hereinafter, a method of outputting a function icon and screen information in response to a request for displaying the function icon by the user will be described in more detail with reference to FIGS. 7A, 7B and 7C, which are conceptual views illustrating a method of displaying function icons in a mobile terminal according to an embodiment of the present invention.

In this embodiment, the controller 180 can display at least one function icon in at least one region of the display unit 151 based on a control command for displaying a function icon being received. Further, the controller 180 can assign the at least one area of the display unit to a region in which the function icon is displayed regardless of the number of displayed function icons. In this instance, the controller 180 can display the at least one region to be distinguished from another region.

For example, referring to FIG. 7A, the controller 180 can assign a region corresponding to the shape of "L" to a region in which the function icons are displayed. Then, when there is a request for displaying a function icon, the controller 180 can display the function icons in the "L" regions 720a or 720b. Furthermore, when the function icons are displayed on the display unit 151, the controller 180 can reduce the screen information such that the screen information is not overlapped with the "L" region 720a.

In addition, a ratio occupied by the "L" region on the display unit 151 corresponds to a ratio for maintaining the display ratio of the screen information prior to reduction even though the screen information is reduced. In other words, the controller 180 adjusts the display ratio of an edge region of the display unit 151 displayed with the function icon to maintain a screen ratio prior to reducing the display ratio of the screen information even though the screen information is reduced.

Further, one region displayed with the function icon may have an "L" shape, thereby reducing the display ratio of the screen information while maintaining the same without generating an unnecessary display region on the display unit 151. As illustrated in FIGS. 7A(a) and 7A(b), the controller 180 can control a location displayed with the function icon in a different manner based on whether the user uses their right or left hand. In other words, the controller 180 can control a location displayed with the function icon in various ways, thereby allowing the user to conveniently select the function icon.

As described above, the location displayed with the function icon may be fixed to any one region or changed based on a location at which the user's hand is sensed by a sensor provided in a region to which a touch input onto the display unit 151 is applied or in a bezel region surrounding the display unit 151.

Further, as illustrated in FIG. 7B(a), the controller 180 cannot reduce the screen information 730 even though a function icon is displayed in one region 720 of the display unit 151. In this instance, the function icon displayed in the one region 720 may be overlapped with the screen information 730, and the function icon and one region 720 may be displayed with transparency, thereby allowing the user to distinguish the screen information 730.

In addition, as illustrated in FIGS. 7B(a) and 7B(b), the function icon can disappear from the display unit 151 based on a region displayed with the screen information 730 being touched. Furthermore, the controller 180 can terminate the display of the function icon when a touch input is not sensed in the one region 720 for a predetermined period of time.

The controller 180 can display the function icon in various regions 740, 750, 760 even though the function icon is not displayed in one region corresponding to the "L" shape as illustrated in FIGS. 7C(a), 7C(b) and 7C(d).

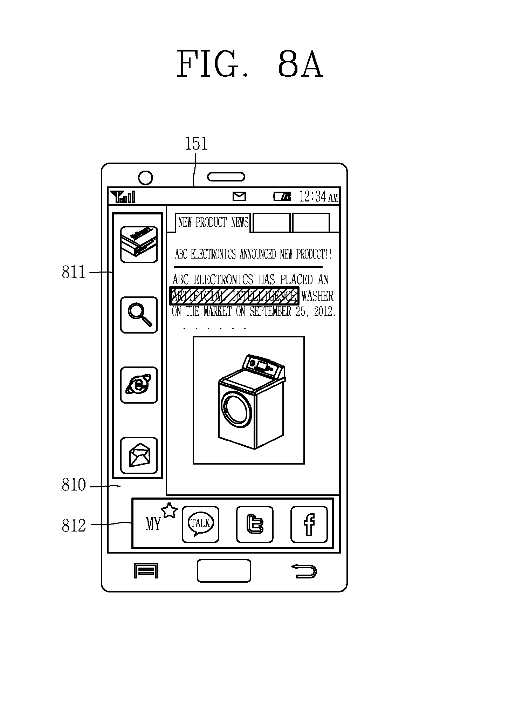

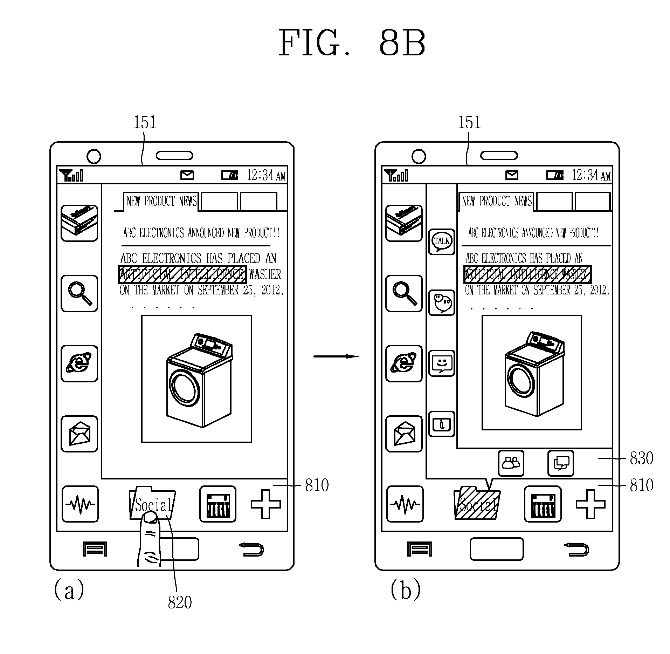

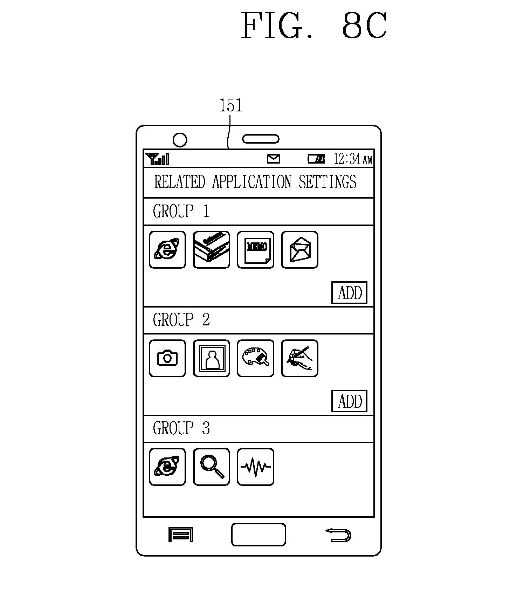

Next, the types of function icons displayed on the display unit based on the user's display request will be described in more detail with reference to FIGS. 8A, 8B and 8C, which are conceptual views illustrating the configuration of a function icon displayed on the display unit in a mobile terminal according to an embodiment of the present invention.

As previously illustrated in FIG. 3, a function icon displayed on the display unit 151 is a function icon related to a function associated with the function corresponding to the screen information 410. Moreover, a function corresponding to the function icon displayed on the display unit 151 may be a function previously configured by the user. In this instance, the preset function may be displayed on the display unit 151 in response to the control command being received even through it is not a function associated with the screen information. A function corresponding to the function icon displayed on the display unit 151 may also be a function frequently performed in the mobile terminal 100.

In addition, the controller 180 can classify the associated function, user's configured function, and frequently used function into different groups, respectively, and the controller 180 can display a function icon corresponding to the different group on the display unit 151. For example, as illustrated in FIG. 8A, the controller 180 can divide one region 810 displayed with function icons into a plurality of regions again, and display a function icon corresponding to the function associated with screen information displayed on the display unit 151 in the first region 811 and display a function icon corresponding to the function configured by the user in the second region 812.

As illustrated in FIG. 8B(a), the controller 180 can display a folder icon 820 containing a plurality of function icons based on the user's setting, and when the folder icon 820 is selected by the user, function icons corresponding to the folder icon 820 may be displayed in one region 830 of the display unit 151 as illustrated in FIG. 8B(b). The size of the one region 830 displayed with function icons contained in the folder icon 820 may be controlled to maintain the display ratio of the screen information.

As illustrated in FIG. 8C, a mobile terminal according to the present invention may group the corresponding applications based on the user's selection. In other words, when there is a request for displaying a function icon when a dictionary application is displayed on the display unit 151 among applications contained in the first group, the controller 180 can display a function icon corresponding to the application contained in the first group on the display unit.

As described above, in a mobile terminal according to the present invention, the configuration of a function icon may be controlled in various ways, and thus the user's desired function can be quickly selected.

Furthermore, in a mobile terminal and a control method thereof according to an embodiment of the present invention, information on a function associated with screen information displayed on the display unit may be provided to the user, thereby allowing the user to reduce time for retrieving a function associated with the displayed screen information.

In addition, in a mobile terminal and a control method thereof according to an embodiment of the present invention, subsequent to implementing a function associated with the displayed screen information, it may be quickly returned to a previous screen through a return icon. Accordingly, when a plurality of applications are driven at the same time, the user may intuitively implement movement between different applications.

Furthermore, according to an embodiment of the present invention, the foregoing method may be implemented as codes readable by a processor on a medium written by the program. Examples of the processor-readable media may include ROM, RAM, CD-ROM, magnetic tape, floppy disk, and optical data storage device, and the like, and also include a device implemented via a carrier wave (for example, transmission via the Internet).

The present invention encompasses various modifications to each of the examples and embodiments discussed herein. According to the invention, one or more features described above in one embodiment or example can be equally applied to another embodiment or example described above. The features of one or more embodiments or examples described above can be combined into each of the embodiments or examples described above. Any full or partial combination of one or more embodiment or examples of the invention is also part of the invention.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
a wireless communication unit (110) configured to wirelessly communicate with at least one other terminal;
a display unit (151) configured to display first screen information corresponding to a first function executed on the mobile terminal; and
a controller (180) configured to:
display a function icon for entering a second function associated with the displayed first screen information, said second function being predetermined and different than the first function,
receive a first selection signal indicating a selection of at least a portion of the displayed first screen information,
receive a second selection signal indicating a selection of the function icon,
execute the second function using the selected portion of the displayed first screen information, and
display second screen information corresponding to the second function on the display unit (151).

2. The mobile terminal of claim 1, further comprising:
a memory (160) configured to store a table including a relationship between the first function and the second function,
wherein the controller (180) is further configured to search the table for the second function that is associated with the first function.

3. The mobile terminal any one of claims 1 and 2, wherein the second function includes a plurality of functions associated with the first function, and the function icon includes a plurality of function icons for respectively executing the plurality of functions.

4. The mobile terminal any one of claims 1 to 3, wherein the first selection signal corresponds to a touch and drag action on the portion of the first screen information.

5. The mobile terminal of claim 4, wherein the second selection signal corresponds to a touch input on the function icon following the touch and drag action of the first selection signal, or corresponds to the function icon being touched and dragged to the selected portion of the first screen information.

6. The mobile terminal any one of claims 1 to 5, wherein the controller (180) is further configured to highlight the selected portion of the first screen information or display an image object including the selection portion with the first screen information.

7. The mobile terminal any one of claims 1 to 6, wherein the controller (180) is further configured to:
display the function icon in at least one edge region of the display unit (151), and
reduce the first screen information such that the first screen information is not overlapped with the one edge region.

8. The mobile terminal of claim 7, wherein the controller (180) is further configured to adjust a ratio of the one edge region to maintain a screen ratio prior to reducing a display ratio of the first screen information even though the first screen information is reduced.

9. The mobile terminal of claim 7, wherein a location of the one edge region displayed corresponds to a direction to which a user applies a touch input onto the display unit (151).

10. The mobile terminal any one of claims 1 to 9, wherein the controller (180) is further configured to:
divide the display unit (151) into first and second display portions, display the first screen information in the first display portion and display the second screen in the second display portion, or
display the second screen information as a full screen over the first screen information, or
display the second screen information as a pop up window over the first screen information.

11. The mobile terminal of claim 10, wherein the controller (180) is further configured to display a selectable return icon on the display unit (151) to return to the first screen information, and stop displaying the second screen information.

12. The mobile terminal any one of claims 1 to 11, wherein the function icon displayed on the display unit changes according to a type of the first screen information.

13. The mobile terminal of claim 12, wherein when the first screen information corresponds to an executed explorer function, the function icon corresponds to a dictionary function application.

14. The mobile terminal of claim 12, wherein the function icon corresponds to a function previously specified by a user.

15. The mobile terminal any one of claims 1 to 14, wherein controller (180) is further configured to display the function icon based on a touch input on the display unit (151), or based on an external physical force to a bezel region surrounding the display unit (151).
